# EUROPÄISCHE PATENTANMELDUNG

(11) **EP 2 481 705 A1**
(43) Veröffentlichungstag der Anmeldung: **01.08.2012**
(21) Anmeldenummer: 11000779.6
(22) Anmeldetag: 01.02.2011
(51) Int. Cl.: C01B 3/50, C10J 3/00, C10K 1/16, C10K 1/32, C01B 3/02

(54) **Verfahren und Vorrichtung zur stofflichen und/oder energetischen Verwertung von biogenen Reststoffen**

(71) Anmelder: Griesser, Hans, 9500 Villach (AT)
(72) Erfinder: Mossegger, Ferdinand, Mag., 9062 Moosburg (AT)
(74) Vertreter: Lüdtke, Frank

(57) **Zusammenfassung**

Die Erfindung betrifft ein Verfahren zur stofflichen und/oder energetischen Verwertung von Biomasse, die mittels einer Vergasung (1) in ein Rauchgas (8) und ein Produktgas (7) umgewandelt wird, wobei das Produktgas (7) einer Druckwechseladsorption (2) oder einem Membranreaktor (2) zugeführt wird, bei der/in dem Wasserstoff (9) abgetrennt wird, das Rauchgas (8) einer Gasbehandlung zugeführt wird, in der CO₂ (10) abgetrennt und deren Endprodukt einer Flüssig-Stickstoffwäsche (5) unterzogen wird, dem Endprodukt der Flüssig-Stickstoffwäsche (5) Wasserstoff (9) aus der Druckwechseladsorption (2) oder dem Membranreaktor (2) des Produktgases (7) zugeführt, und auf das ideale Gasverhältnis für die Ammoniaksynthese (6) eingestellt und danach der Ammoniaksynthese (6) nach bekannten Verfahren zugeführt wird und daraus Ammoniak (11) produziert wird, sowie eine Anlage zur stofflichen und/oder energetischen Verwertung von Biomasse.

Das erfindungsgemäße Verfahren und die erfindungsgemäße Vorrichtung haben den Vorteil, daß das Produkt- und Rauchgas der vorgeschlagenen Zusammensetzung aus einer Vergasung von Biomasse eine energetische und stoffliche Verwertung ermöglicht, bei der ein hoher Anteil an Energie und Wertstoffen entsteht.

## Beschreibung

Die Erfindung betrifft ein Verfahren zur stofflichen und/oder energetischen Verwertung von biogenen Reststoffen entsprechend den Merkmalen des ersten Patentanspruches und eine Anlage zur Durchführung des Verfahrens.

Die Erfindung ist überall dort einsetzbar, wo biogene Reststoffe, im Folgenden als Biomasse bezeichnet, in einem Vergaser vergast werden und eine weitere Veredelung des Produktgases und des Rauchgases zu biogenen Wertstoffen angestrebt wird.

Der Gaserzeuger in der Biomasse-Raffinerie dient zur Herstellung des Produktgases aus der Biomasse. Diese sollte einen hohen Heizwert, eine hohe Reinheit und gleich bleibende Qualität aufweisen.

Für die Gaserzeugung aus Biomasse wurden die Verfahren der Festbettvergaser, jene der Wirbelschichtvergaser und jene der Flugstromvergaser entwickelt.

Der Gaserzeuger besteht bei einem Wirbelschichtvergaser aus dem Vergaser, z. B. mit einer stationären Wirbelschicht, der Brennkammer/Riser (transportierende Wirbelschicht), dem Zyklon mit Siphon und der Nachbrennkammer. Auch alle anderen Vergasungssysteme für Biomasse, welche ein ausreichend beschaffenes Produktgas zu erzeugen vermögen, sind für die Gaserzeugung anwendbar. Wesentlich ist hierbei ein hoher Wasserstoffgehalt und eine hohe Reinheit im Produktgas.

DE 10 2006 022 265 A1 beschreibt ein Verfahren und eine Vorrichtung zur optimalen Wirbelschichtvergasung von Biomasse zu Synthesegas. Die Veredelung findet mittels einer Gasreinigung und CO₂-Entfernung über eine Rectisol-Anlage über die Fischer-Tropsch-Synthese und über eine Optimierung des Verhältnisses CO₂ zu CO über das Shift-Verfahren statt. Verfahren und Vorrichtung sehen vor allem Verbesserungen im Wirbelbett durch den Einsatz von Treibstrahldüsen vor, was zu einer Verweilzeiterhöhung und einer intensiveren Vermischung des Staubes mit dem heißen Brennbettmaterial führt.

DE 100 31 501 B1 beschreibt ein Verfahren zur qualitätsgerechten Bereitstellung von Brenn-, Synthese- und Mischgasen aus Abfällen in einem aus einer Gaserzeugungsseite und einer Gasverwertungsseite bestehenden Verbund. Das Dokument beschreibt die Gaserzeugungsseite mit einer Festbett- und Flugstromvergasungseinheit mit nachgeschalteten Kondensationsanlagen und die Gasverwertungsseite aus einem GuD-Kraftwerk, einer Kesselanlage mit Rauchgasreinigung sowie einer stofflichen Synthesegasverwertungseinheit. Das erzeugte Gas soll als Mischgas über eine Gaswäsche gefahren werden. Das Dokument beschreibt im Wesentlichen die energetische Verwertung des Gases, während die stoffliche Verwertung eher eine untergeordnete Rolle spielt.

Auch WO 2010/136 313 A1 beschreibt ein Verfahren zur Herstellung von Synthesegas. Im Dokument wird ein Verfahren beschrieben, bei dem Hochofengas aus einem Hochofenprozeß in Wasserstoff und einen kohlenwasserstoffhaltigen Restgasstrom getrennt wird. Dies geschieht mittels einer Druckwechseladsorptionsanlage, die einen nahezu reinen Wasserstoffstrom erzeugt. Als Ausgangsstoffe für die Synthesegasherstellung werden neben fossilen Brennstoffen auch Biomasse, Holz, Torf oder Abfälle eingesetzt.

Dieses Verfahren geht eher auf den Vergasungsprozeß als auf die stoffliche Verwertung der biogenen Reststoffe ein.

Die einzelnen Anwendungen unterscheiden sich zum Teil recht deutlich in Ihrer technischen Ausführung wenngleich Ihnen allen dasselbe Grundprinzip zu Grunde liegt. Für die vorliegende erfinderische Lösung sind sämtliche Vergasungsverfahren geeignet, welche ein Produktgas mit einem hohen Anteil an Wasserstoff und einer entsprechenden Reinheit ergeben, die geeignet ist in einer chemisch-physikalischen Reinigung die nachgeschalteten Prozesse zu ermöglichen.

Die Frage nach dem Stand der Technik zielt in dieser Anwendung in erster Linie darauf ab welche Verfahren bisher entwickelt wurden, um mit dem hergestellten Produktgas weitere Bearbeitungsschritte bzw. Produkte darzustellen. Hierzu sei bemerkt, dass alle bisherigen Bemühungen stets der Energieproduktion in verschiedenen Formen galten. Neben den Verwertungen des Produktgases in Motoren oder Gasturbinen mit den bekannten Problematiken (z. B. Ladedruck der Turbinen) wurde auch intensiv in Richtung der Erzeugung von Treibstoffen entwickelt. Hierzu wurden Verfahren entwickelt bzw. angewendet wie beispielsweise Fischer-Tropsch-Synthese, die Methanolsynthese, die SNG-Synthese, die Dimethylether-Synthese oder die Erzeugung von Hythanen Energie aus Biomasse, Martin Kaltschmitt, Hans Hartmann, Hermann Hofbauer, Springer Verlag 2009, 2. Auflage.

Nach dem bisherigen Stand der Technik wurde hauptsächlich der Produktgasstrom einer Bearbeitung unterzogen, wohingegen eine Bearbeitung des Produktgas und des Rauchgasstromes und die Zusammenführung von Komponenten und Verfahren aus beiden Teilen zu neuen Produkten und Synergie eher nicht erfolgten.

Das Produktgas kann nach dem Stand der Technik wahlweise mit einem Gasmotor oder mit einer Turbine als Gas- und Dampfkraftwerk (GuD-Holz-Kraftwerk) verstromt werden, was in der Regel eine sehr aufwendige und energieintensive Unterdrucksetzung des Produktgases erfordert. Beide Varianten sind von einem bescheidenen energetischen Wirkungsgrad gekennzeichnet, der den Wirkungsgrad vergleichbarer, mit fossilen Brennstoffen betriebener, Systeme nicht erreicht. In erster Linie die Turbinenanwendung scheitert am hohen energetischen Aufwand der Kompression um den notwendigen Ladedruck der Gasturbine zu erreichen. Auch ist die ausschließlich energetische Verwertung des Wasserstoffes in einem Motor oder einer Gasturbine ineffizient.

Aufgabe der Erfindung ist es daher, die Produkte einer Vergasung von Biomasse der oben genannten Anlage stofflich und/oder energetisch so zu verarbeiten, dass im Sinne einer chemisch und technisch optimierten Anlage ein hoher Anteil an Wertstoffen und Energie entsteht.

Diese Aufgabe wird durch ein Verfahren den Merkmalen des ersten Patentanspruches und einer Anlage nach den Merkmalen des Anspruches 9 gelöst.

Unteransprüche geben vorteilhafte Ausgestaltungen der Erfindung wieder.

Die erfindungsgemäße Lösung sieht ein Verfahren zur stofflichen und/oder energetischen Verwertung von Biomasse mittels eines Vergasungsverfahrens vor. Statt des Vergasungsverfahrens sind auch äquivalente Verfahren denkbar. Bei diesen Verfahren entstehen ein Rauch- und ein Produktgas, wobei das Rauchgas einer Gasraffinierung zugeführt wird, in deren Verlauf CO₂ abgetrennt wird und das verbleibende Gas einer Flüssig-Stickstoffwäsche unterzogen wird.

Dem verbleibenden Synthesegas wird der Wasserstoff aus der Druckwechseladsorption oder einem Membranreaktor des Produktgases zugegeben. Die Druckwechseladsorption kann mittels Molsieb, Palladiumpartikel oder sonstige Edelmetallpartikel, Palladiummembranen oder sonstige Edelmetallmembranen vorgenommen werden. Der Wasserstoff aus einer Druckwechseladsorption bzw. dem Membranreaktor wird mittels einer Leitung in die Flüssig-Stickstoffwäsche geleitet und das Endprodukt der Flüssig-Stickstoffwäsche in der Ammoniaksynthese nach bekannten Verfahren zu Ammoniak verarbeitet.

Der Erfindung liegt u. a. die Erkenntnis zugrunde, daß sich die Stoffe von Rauch- und Produktgas und stofflich und/oder energetisch vorteilhaft zu den Produkten Wasserstoff, CO₂, Ammoniak und Harnstoff verarbeiten lassen.

Für die Raffinierung des Rauchgases sind eine Rectisol-Wäsche, ein Membranreaktor, eine Amin-, eine Karbonat-Wäsche oder ein Druckwechselreaktor geeignet.

Vorteilhaft ist es, die Rauchgasraffinierung nach einem Rectisol-Verfahren durchzuführen. Das Rectisol-Verfahren ist eine physikalische Sauergaswäsche, die mittels Methanol als organischem Lösungsmittel bei tiefen Temperaturen aus dem Rauchgas CO₂ abreinigt. In einer ersten Stufe wird das kalte Methanol mit CO₂ beladen, in einem hohen Waschturm bzw. durch Adsorption entfernt und in einer zweiten Stufe durch Entspannung und Stripgase wieder abgetrennt. Zugleich kondensiert das im Rauchgasstrom enthaltene Wasser aus und der Gasstrom wird trocken. Das erzeugte CO₂ ist sehr rein und kann in vielen anderen chemischen Verfahren z .B. Produktion von Harnstoff mit Ammoniak sowie in der Lebensmittelindustrie eingesetzt werden.

Dabei ist es vorteilhaft, der Rauchgasreinigung oder Rauchgasraffinerierung eine Trocknung vorzuschalten.

Das vom CO₂ gereinigte Rauchgas wird gemeinsam mit dem aus dem Produktgas abgetrennten Wasserstoff einer weiteren Bearbeitungsstufe zugeführt.

Zunächst wird das Gas von Resten wie CO etc. gereinigt und das für die Ammoniaksynthese ideale Verhältnis zwischen Stickstoff und Wasserstoff auf einen Wert von 1:3 eingestellt. Dies geschieht in der Flüssig-Stickstoffwäsche und ist Voraussetzung für die anschließende Synthese von Ammoniak.

Der extrem hohe Energiebedarf zur Erzeugung von Ammoniak entfällt auf die ansonsten aufwendige Herstellung von Wasserstoff aus Erdgas, welcher im vorliegenden Verfahren bereits vorhanden ist. Zudem hat die Herstellung von biogenem Ammoniak, wie in der erfinderischen Lösung dargestellt, den Vorteil, dass durch den Wegfall der extrem hohen Energiekosten der fossilen Erzeugung die CO2-Emission signifikant geringer ist als bei konventionell hergestellten Produkten.

Der im Vergasungsverfahren entstehende Stickstoff wird zwar ebenfalls als Ausgangsprodukt für Ammoniaksynthese verwendet, sein Wert ist aber eher gering. Er kann dem Ammoniaksynthesereaktor auch aus anderer Quelle zugegeben werden, beispielsweise als N₂ aus Luft, welches z. B. mittels Stickstoffgenerators gewonnen wurde.

Die Erfindung sieht weiterhin vor, das entstandene Produktgas einer Druckwechseladsorption oder einem Membranreaktor zuzuführen, bei der der Wasserstoff abgetrennt wird. Nachdem für die Abscheidung von Wasserstoff bereits eine Kompression des Produktgases erfolgt ist, und damit das Restgas ebenfalls unter Druck steht, kann in einer Anlagenverschaltung das Produktgas ohne weitere Energiezufuhr einer Gasturbine zugeführt werden. Denkbar sind auch mehrere Gasturbinen oder Gasmotoren. Dadurch wird der Einsatz eines Gas- und Dampfprozesses ohne zusätzlichen Energieaufwand möglich und die Verstromungseffizienz steigt um die Hälfte.

Der Druck des Produktgases nach der Druckwechseladsorption kann über 10 bar, z. B. 10 bis 35 bar, betragen.

Für den Fall einer energetischen Nutzung des Produktgases mittels Gasturbine ist es vorteilhaft, das Produktgas zu reinigen und einer Partikel- oder/und Teerabscheidung zu unterziehen.

Der Abgasstrom der Gasturbine kann zusammen mit dem Rauchgas in vorteilhafter Weise der Gasraffinierung zugeführt werden.

Der Erfindung liegt unter anderem auch die Erkenntnis zugrunde dass der Wasserstoff im Produktgas als Gemisch für die energetische Nutzung ungeeignet ist. Deshalb wird durch eine Druckwechseladsorption oder einen Membranreaktor Wasserstoff abgetrennt. Nachdem das Verfahren bei Druckverhältnissen über 10 bar gefahren wird, ist eine anschließende Verschiebung an die weitere Verarbeitungsstätte über eine Druckleitung ohne weitere Bearbeitung möglich. Die aufwendige und energieintensive Unterdrucksetzung des Produktgases und ggf. ein Zwischentransport per LKW entfällt.

Die Entnahme erfolgt zudem mit einem Anteil von 25 bis 100 % des Gesamtinhaltes von Wasserstoff im Produktgasstrom wodurch die Verstromungsleistung der nachgeschalteten Aggregate nicht wesentlich abnimmt (Kuppelprodukt).

Damit ist es möglich, das Produktgas aus der Druckwechseladsorption ohne eine Kompression des Gasstromes direkt der Gasturbine zuzuführen. Das ermöglicht eine wesentlich höhere Verstromungseffizienz und damit eine bessere Ausnutzung des Energiegehaltes der eingesetzten Biomasse. Die Investition wird geringer und die Installation von Katalysatoren nach den Motoren zur Reinigung des Abgases entfällt, da die Turbine die Reststoffe ausbrennt, was die höhere Betriebstemperatur in der Brennkammer bewirkt.

Optional kann das gewonnene CO₂ mit dem hergestellten Ammoniak vermengt und in einem Harnstoffhochdruckreaktor zu Harnstoff umgesetzt werden.

Alle erzeugten Produkte (H₂, CO₂, NH₃) können getrennt gesammelt und ausgeschleust werden. Es können nur einzelne Verfahrensmodule (Wasserstoffausschleusung, CO₂-Ausschleusung sowie Ammoniaksynthese samt Ammoniakausschleusung) oder Kombinationen hiervon installiert und verwendet werden.

Zum Transport von Rauchgas, H₂, CO₂, NH₃ und Produktgas sind zwischen den einzelnen Aggregaten und Reaktoren Leitungen angeordnet. Dabei ist es vorteilhaft, in oder an den Leitungen Pufferbehältnisse anzuordnen.

Das erfindungsgemäße Verfahren und die erfindungsgemäße Vorrichtung haben den Vorteil, daß das Produkt- und Rauchgas der vorgeschlagenen Zusammensetzung aus einer Vergasung von Biomasse eine energetische und stoffliche Verwertung ermöglicht, bei der ein hoher Anteil an Energie und Wertstoffen entsteht.

Im Folgenden wird die Erfindung an fünf Figuren und einem Ausführungsbeispiel näher erläutert. Die Figuren zeigen:
- Figur 1:: Erfindungsgemäßes Verfahren zu stofflichen Verwertung von biogenen Rohstoffen in schematischer Darstellung-
- Figur 2:: Erfindungsgemäßes Verfahren zur stofflichen und energetischen Verwertung von biogenen Rohstoffen in schematischer Darstellung.
- Figur 3:: Erfindungsgemäßes Verfahren zur stofflichen und energetischen Verwertung von biogenen Rohstoffen in schematischer Darstellung, wobei das Rauchgas der Gasturbine der Rectisol-Wäsche zugeführt wird.
- Figur 4:: Erfindungsgemäßes Verfahren zur stofflichen und energetischen Verwertung von biogenen Rohstoffen in schematischer Darstellung, wobei eine Harnstoffproduktion angekoppelt ist.
- Figur 5:: Erfindungsgemäßes Verfahren zur stofflichen Verwertung von biogenen Rohstoffen, wobei N₂zugegeben wird.

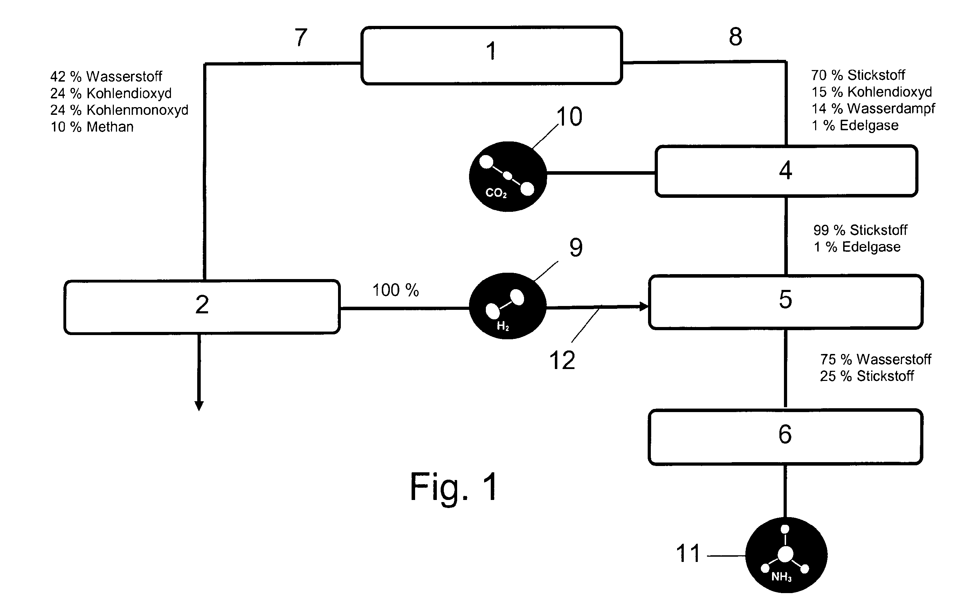

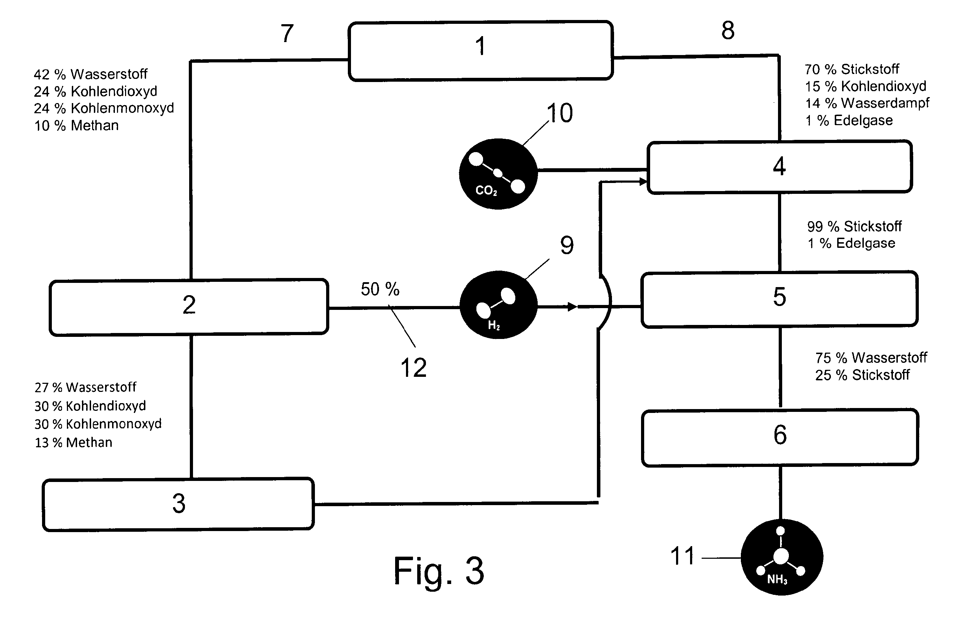

Die *Figur 1* *zeigt* die rein stoffliche Verwertung von Produktgas 7 und Rauchgas 8 aus dem Vergasungsprozeß 1. Beispielhaft wurde in Figur 1 und 3 die jeweilige Zusammensetzung der Stoffströme angegeben. Die Zusammensetzung resultiert aus dem angewendeten Wirbelschichtvergasungsverfahren. Sofern andere Vergasungsverfahren angewendet werden, ändert sich diese Zusammensetzung.

Das Produktgas 7 wird einer Druckwechseladsorption unterzogen, bei der Wasserstoff 9 abgetrennt wird. Das Rauchgas 8 wird einer Rectisol-Wäsche 4 unterzogen, bei der CO₂ 10 gewonnen wird. Der Wasserstoff 9 wird über die Leitung 12 der Flüssig-Stickstoffwäsche 5 des verbleibenden Rauchgases nach der Rectisol-Wäsche 4 zugeführt, wobei das für die Ammoniaksynthese ideale Verhältnis zwischen Stickstoff und Wasserstoff 9 auf einen Wert von 1 : 3 eingestellt wird. Im Ammoniak-Synthesereaktor 6 wird aus den gewonnenen Produkten Wasserstoff und Stickstoff Ammoniak 11 hergestellt.

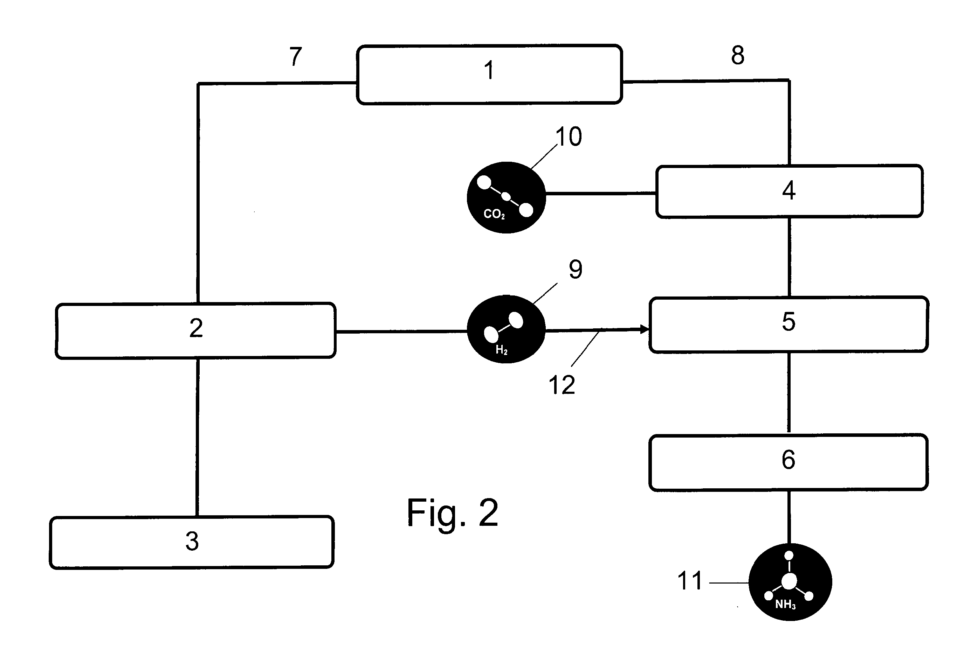

Die *Figur 2* zeigt die Vergasung 1 in der ein Produktgas 7 mit einem hohen Wasserstoffanteil und einer hohen Reinheit und ein Rauchgas 8 entstehen. Aus dem Produktgas 7 werden 25 bis 100 % des Wasserstoffs 9 mittels Druckwechseladsorption 2 oder Membranreaktor abgetrennt.

Das so veränderte Produktgas 7 wird in einer Gasturbine 3 energetisch verwertet.

Das Rauchgas 8 des Vergasers 1 wird der Rectisol-Wäsche 4 zugeführt, wobei CO₂ 10 abgetrennt wird, so daß das Rauchgas 8 nach der CO₂-Abtrennung 4 fast ausschließlich Stickstoff enthält. Das stofflich so veränderte Rauchgas 8 wird einer Flüssigstickstoffwäsche 5 unterzogen, bei der Wasserstoff 9 zugegeben wird, so daß nach dieser 75 % Wasserstoff und 25 % Stickstoff vorhanden sind, die die Voraussetzung für die Ammoniaksynthese 6 bilden.

Zur Maximierung der Produktion von CO₂ 10 zur Abgabe an die Industrie oder weitere stoffliche Verwendung wird der Rauchgasstrom 8 des Vergasers 1 und jener der Gasturbine 3 vereinigt und anschließend einer Rauchgaswäsche 4 unterzogen.

Diese Variante zeigt *Figur3**.*

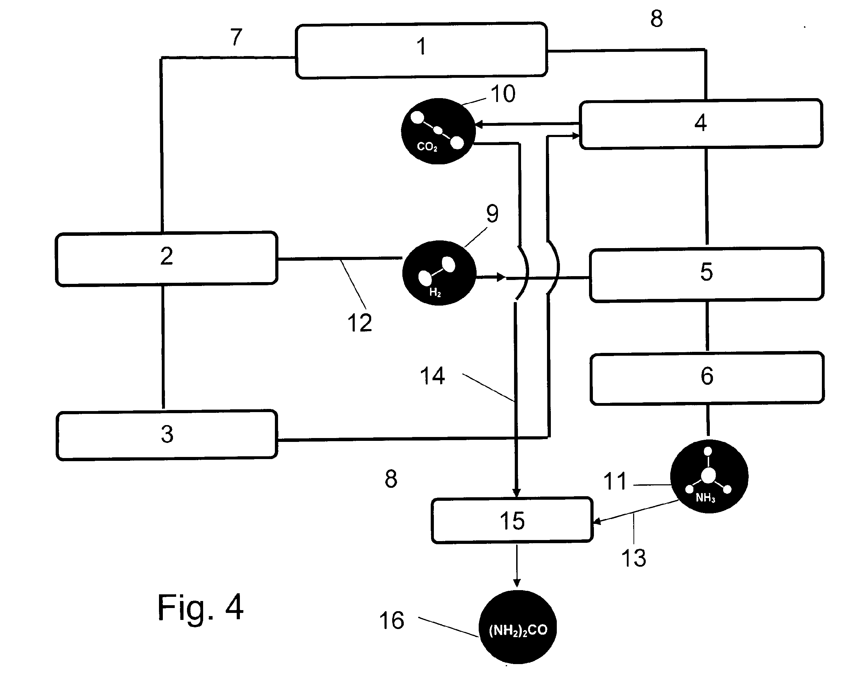

Die *Figur 4* zeigt in schematischer Darstellung die direkte Ankopplung einer Harnstoffproduktion 15. Diese schafft die Möglichkeit das Produktportfolio zu erweitern und zugleich in Form einer On-Site-Anlage die gegeben Stoffe CO₂ 10 und Ammoniak 11 vor Ort weiter zu verarbeiten. Dadurch wird die Lagerkapazität von Ammoniak 11 vor Ort reduziert, was Vorteile für die Standortauswahl bzw. die Genehmigungsverfahren hat. NH₃ 11 wird über eine Leitung 13 dem Harnstoffdruckreaktor 15 zusammen mit CO₂ 10 aus der Gasraffinerie, wie der Rectisol-Wäsche 4, aufgegeben, damit Harnstoff 16 entsteht. Der Transport des CO₂ 10 aus der Rectisol-Wäsche 4 erfolgt über die Leitung 14.

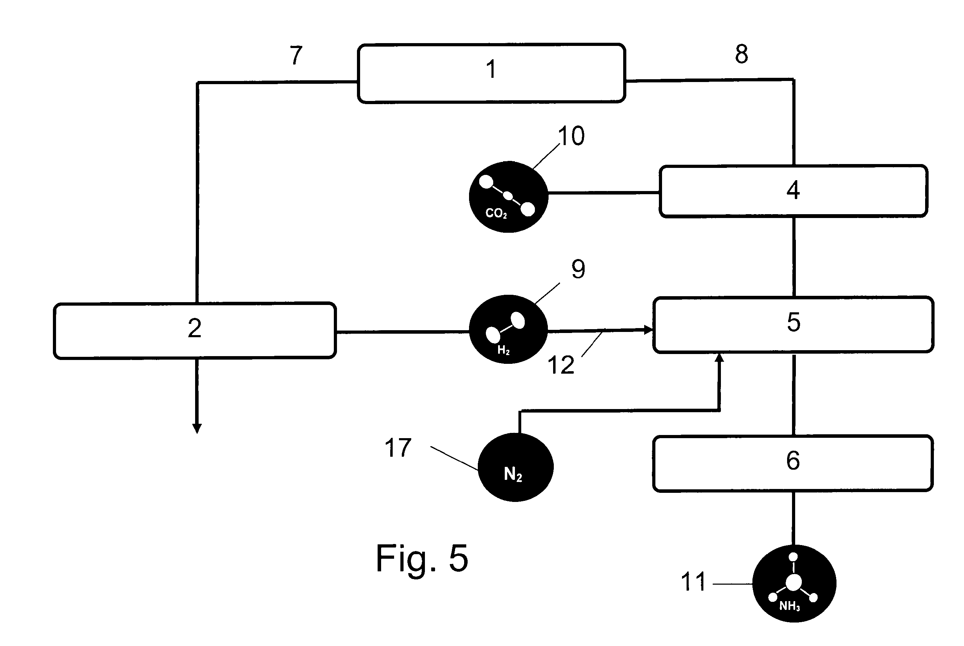

Die *Figur* 5 zeigt eine rein stoffliche Verwertung von Produktgas 7 und Rauchgas 8 analog zur Figur 1, wobei der Stickstoff 17 nicht aus dem Rauchgas 8, sondern aus einem externen Verfahren als Stickstoff 17 in dem Prozeß zugegeben wird. Im vorliegenden Fall erfolgt die Stickstoffherstellung aus Luft mittels Stickstoffgenerator, wobei der Stickstoff 17 zur Anlage transportiert und dem Ammoniaksynthesereaktor 6 zugegeben wird.

### Liste der verwendeten Bezugszeichen

- 1: Vergaser
- 2: Druckwechseladsorption
- 3: Gasturbine
- 4: Rectisol-Wäsche
- 5: Flüssig-Stickstoffwäsche mit Einstellung des idealen Gasverhältnisses zur Ammoniaksynthese
- 6: Ammoniaksynthesereaktor
- 7: Produktgas
- 8: Rauchgas
- 9: H₂
- 10: CO₂
- 11: NH₃
- 12: Leitung zwischen 2 und 5
- 13: Leitung zwischen 6 und 15
- 14: Leitung zwischen 4 und 15
- 15: Harnstoffhochdruckreaktor
- 16: (NH₂)₂CO
- 17: N₂ Stickstoff aus einem anderen Prozeß

## Patentansprüche

1. Verfahren zur stofflichen und/oder energetischen Verwertung von Biomasse, die mittels einer Vergasung (1) in ein Rauchgas (8) und ein Produktgas (7) umgewandelt wird, wobei
- das Produktgas (7) einer Druckwechseladsorption (2) oder einem Membranreaktor (2) zugeführt wird, bei der/in dem Wasserstoff (9) abgetrennt wird,
- das Rauchgas (8) einer Gasbehandlung zugeführt wird, in der CO₂ (10) abgetrennt und deren Endprodukt einer Flüssig-Stickstoffwäsche (5) unterzogen wird,
- dem Endprodukt der Flüssig-Stickstoffwäsche (5) Wasserstoff (9) aus der Druckwechseladsorption (2) oder dem Membranreaktor (2) des Produktgases (7) zugeführt, und
- auf das ideale Gasverhältnis für die Ammoniaksynthese (6) eingestellt und danach der Ammoniaksynthese (6) nach bekannten Verfahren zugeführt wird und daraus Ammoniak (11) produziert wird.

2. Verfahren nach Anspruch 1, **dadurch gekennzeichnet, daß** Ammoniak (11) und CO₂ (10) in einem Harnstoffhochdruckreaktor (15) zu Harnstoff (16) umgesetztwerden.

3. Verfahren nach Anspruch 1 und 2, **dadurch gekennzeichnet, daß** das aus der Biomasse gewonnene Produktgas (7) gekühlt und einer Partikel- und Teerabscheidung unterzogen wird.

4. Verfahren nach einem der Ansprüche 1 bis 3, **dadurch gekennzeichnet, daß** das unter Druck stehende Produktgas (7) einer Energieerzeugung in einer Gasturbine (3) zugeführt wird.

5. Verfahren nach Anspruch 4, **dadurch gekennzeichnet, daß** der Abgasstrom der Gasturbine (3) zusammen mit dem Rauchgas (8) einer Gasbehandlung unterzogen wird.

6. Verfahren nach Anspruch 3, **dadurch gekennzeichnet, daß** die Gasbehandlung mittels einer Rectisol-Wäsche (4) erfolgt, bei der CO₂ (10) mittels Methanol bei tiefen Temperaturen aus dem Rauchgas (8) entfernt wird oder mit einem Membranreaktor, einer Amin- oder einer Karbonatwäsche oder einem Druckwechseladsorptionsverfahren CO₂ (10) abgetrennt wird.

7. Verfahren nach einem der Ansprüche 1 bis 6, **dadurch gekennzeichnet, daß** das Produktgas (7) nach der Druckwechsel-Adsorption (2) oder dem Membranreaktor einen Mindestdruck von 10 bar aufweist.

8. Verfahren nach einem der Ansprüche 1 bis 7, **dadurch gekennzeichnet, daß** dem Ammoniaksynthesereaktor (6) Stickstoff (17) separat zugeführt wird.

9. Anlage zur stofflichen und/oder energetischen Verwertung von Biomasse mit einem Verfahren nach einem der Merkmale der Ansprüche 1 bis 8, bestehend aus
- dem Vergaser (1),
- einer an den Vergaser (1) angeschlossenen Druckwechseladsorptionsanlage (2) oder einem Membranreaktor ,
- einer Rectisol-Wäsche (4) oder einem Membranreaktor oder einer Aminwäsche oder einer Karbonatwäsche oder einem Druckwechselreaktor,
- einer Flüssig-Stickstoffwäsche (5) und
- einem Ammoniaksynthesereaktor (16) zum Herstellen von Ammoniak (11) wobei eine Leitung (12) für Wasserstoff (9) zwischen der Druckwechseladsorption oder dem Membranreaktor (2) und der Flüssig-Stickstoffwäsche (5) mit anschließender Einstellung des idealen Gasverhältnisses angeordnet ist.

10. Anlage nach Anspruch 9, **dadurch gekennzeichnet, daß** das Produktgas (7) in einem Produktgaskühler gekühlt wird.

11. Anlage nach Anspruch 9, **gekennzeichnet durch** eine Gasturbine (3) zur energetischen Verwertung nach der Druckwechseladsorptionsanlage (2) oder dem Membranreaktor.

12. Anlage nach Anspruch 11, **gekennzeichnet durch** eine Leitung (13) für Rauchgas (8) zwischen der Gasturbine (3) und der Rectisol-Wäsche (4) oder einem Membranreaktor oder einer Aminwäsche oder einer Karbonatwäsche oder einem Druckwechselreaktor.

13. Anlage nach einem der Ansprüche9 bis 12, **gekennzeichnet durch** einen Harnstoffhochdruckreaktor (15) nach dem Ammoniaksynthesereaktor (6), wobei eine Leitung (13) für Ammoniak (11) zwischen Ammoniakreaktor (6) und Harnstoffhochdruckreaktor (15) und eine Leitung (14) für CO₂ (10) zwischen Rectisol-Wäsche (4) und Harnstoffhochdruckreaktor (15) angeordnet sind.

14. Anlage nach einem der Ansprüche 9 bis13, **dadurch gekennzeichnet, daß** in oder an der Leitung (12, 13, 14) ein Pufferbehältnis angeordnet ist.

15. Anlage nach einem der Ansprüche 9 bis14 **dadurch gekennzeichnet, daß** zur Partikelabtrennung ein Gewebe- oder Schüttbettfilter und zur Teerabscheidung ein Nasswäscher oder Aktivkohlefilter eingesetzt wird.

16. Anlage nach einem der Ansprüche 9 bis 15, **dadurch gekennzeichnet, daß** zur Druckwechseladsorption (2) ein Molsieb, Palladiumpartikel oder sonstige Edelmetallpartikel oder Palladiummembranen oder sonstige Edelmetallmembrane angeordnet sind.
